# EUROPEAN PATENT APPLICATION

(11) **EP 1 813 874 A2**
(43) Date of publication of application: **01.08.2007**
(21) Application number: 07250286.7
(22) Date of filing: 24.01.2007
(51) Int. Cl.: F24D 3/14

(54) **Apparatus and method for heating a space**

(30) Priority: 30.01.2006 GB 0601812
(71) Applicant: Polypipe Building Products Ltd., Edlington, Doncaster DN12 1ES (GB)
(72) Inventor: Raynor, David, Oughtibridge, Sheffield S35 0FD (GB); Cockayne, Darren, Cusworth, Doncaster DN5 8HZ (GB)
(74) Representative: Johnson, Terence Leslie

(57) **Abstract**

The invention relates to apparatus and method are for providing heating to a room or dwelling comprising several rooms by scheduling underfloor heating packs or "packages" for new building projects, particularly for domestic dwellings built to current building regulations. The majority of rooms in dwellings built to these regulations require less than 70 w/m² and are thus suitable for underfloor heating. Using the invention, the heating in the form of a pipe in floor panel 2 for heated water being laid under a solid floor screed 3 of minimum 65mm depth and over insulation 4 and a solid sub-floor, there being edge insulation 5.

It will be understood that a person who wishes to install products can create a single "pack" of products by going through first, second and third steps, in other words steps "1, 2, 3". Thus it is not necessary to order a variety of separate items, once the "1, 2, 3" calculation is carried out, it is only necessary to order the desired discrete number of "packs" for a particular installation using one code number which is provided by the method of the invention hereinbefore described.

## Description

The invention relates to an apparatus and method providing heating to a space.

It is often necessary for heating for a space comprising a number of separate, smaller, spaces to be provided. Such a space may be a dwelling such as a house comprising a number of separate rooms. However, one house may have a different numbers of rooms from another house, and also different types of floor, for example solid floors, and floating or suspended floors (which generally require a double heat spreader plate).

Usually, in accordance with modem practice, particularly for new building projects, the heating is underfloor i.e. what is known to the relevant skilled person as an Overlay (trade mark) system.

In the past, it has proved a time-consuming and expensive operation to determine a requisite system for a particular building project, usually with the aid of expensive manufacturers' designs.

It is an object of the invention to seek to mitigate this disadvantage.

According to a first aspect of the invention there is provided apparatus for heating a space, comprising a heating device adapted to be laid in or on a substrate of a floor, and a temperature regulation element for controlling the heating device dedicated to combinations of particular floor type and size.

Using the invention dedicated heating systems or packs for a particular space can be determined without reference to a manufacturers' design.

The apparatus may have a maximum output of 100 w/m².

The temperature regulation element may comprise a zonal regulation unit, or alternatively the temperature regulation unit may comprise an electric heating unit.

The electrical heating unit may comprise a pump, heater device and tank such as a feed and expansion tank for containing heatable liquid, the heater device suitably comprising a 2kw heater.

The space may comprise a room, and the floor may be a solid floor.

The floor area may be up to about 12m and the temperature regulation unit may then comprise a zonal regulation unit.

The floor area may be up to about 20 m² and the temperature regulation unit may then comprise an electric heating unit.

The space may comprise a room and the floor may be an overlay floor, the floor area of which may be up to 12m and the temperature regulation unit may comprise a zonal regulation unit.

Alternatively the floor area may be up to 5m² and the temperature regulation unit may comprise a zonal regulation unit with a temperature limiting valve. This is suitable for a bath or shower room.

The floor area may be up to 16m² and the temperature regulation unit may comprise an electric heating unit.

When the floor area may be up to 20m² the temperature regulation unit may comprise a zonal regulation unit.

The space may comprise a multi-room space such as a house.

The heating device may comprise a manifold, for each room, adapted to provide heating liquid to the device.

The manifolds may each be position within 6m - 7.5m from an entrance to the room.

There may be for each room one or more heating circuits depending on the floor area of a room.

Suitably there may be two said circuits for rooms of area of 20m² to 30m².

There may usually be one temperature regulation element per room.

According to a second aspect, there is provided a method for providing heating to a space comprising a number of separate spaces comprising the steps of selecting a floor type and area of a space to be heated, selecting the number of separate spaces of the space to be heated, selecting a number of heating zones to be controlled in each separate space, and providing a desired number of heating packs for the floor type and area of each separate space to be heated.

The method may comprise providing a list of selection criteria for each separate space whereby to provide for heating of the space.

The first step may comprise selecting a floor type applicable for each separate space served by a single manifold, and selecing the total heated floor area to be served.

The second step may comprise selecting the number of circuits to be provided for each separate space.

The third step may comprise selecting the number of control zones for each separate space.

The method may comprise providing a code from which respective heating device packs for a space are selected according to the selection steps carried out.

There may be a step of checking the compatibility of the space to be heated against parameters for each particular space.

The method may comprise the step of checking a position of an inlet manifold for heating water of the pack in relation to an entrance to a particular space.

The method may comprise providing a location of the manifold of between 6m and 7.5m from the entrance.

The method may comprise the step of providing one heating pack per floor, and preferably per floor type.

The method may comprise providing a maximum floor area per pack of 120m², and providing a maximum number of circuits per pack of twelve.

It will be understood that the method extends to providing for building projects that are not readily covered by the method hereinbefore described, a full design and component list for the method and apparatus which may be provided by a builder completing a specification, providing that specification with drawings to a provider of the apparatus and method, and receiving a design and component list dedicated to that building project. In this way, as with the basic method, the technical effect of installing an efficient heating unit for each space to be heated, without the need for manufacturers' design, is achievable.

The invention is hereinafter described, by way of example, with reference to the accompanying drawings.
Fig. 1 shows graphically heat requirement to room floor area of a room for which heating is to be provided by an apparatus and method according to the invention;
Fig. 2 shows schematically a first step in the method;
Fig. 3 shows schematically a second step in the method;
Fig. 4 shows schematically a third step in the method;
Fig. 5 shows schematically a part of a solid floor with apparatus according to the invention installed; and
Fig. 6 shows schematically a part of an overlay floor with apparatus according to the invention installed.

Referring to the drawings, the apparatus and method are for providing heating to a room or dwelling comprising several rooms by scheduling underfloor heating packs or "packages" for new building projects, particularly for domestic dwellings built to current building regulations. The majority of rooms in dwellings built to these regulations require less than 70 w/m² and are thus suitable for underfloor heating.

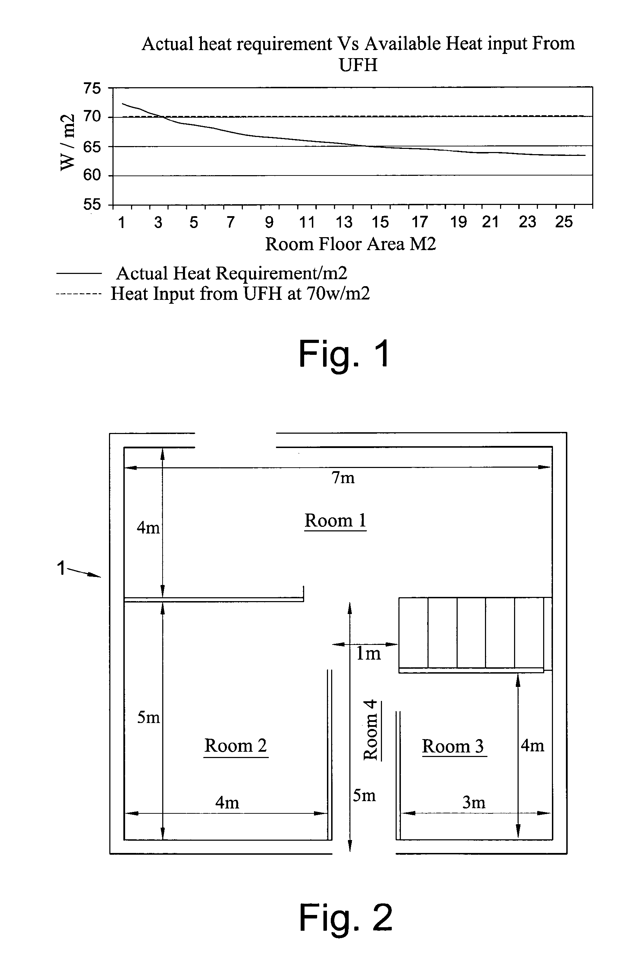

The graph in Fig. 1 shows that rooms built to the following specification require less than 70 2/m²:-
Outside Walls (1.5 O.W/room) U=0.35w/m deg C;
Windows Area = 20% of Floor Area U=2.2w/m²;
Ceiling U=0.25w/m deg C;
1.5 Air Changes per Hour;
20 Deg C inside -3 Deg C Outside;
2.4 m Ceiling.

In step one of the method, Fig. 2, the floor type applicable for each area served by a single manifold is selected, the floor or space 1 having four particular spaces, or rooms, Room 1, Room 2, Room 3, and Room 4.

The floor can be solid, floating or suspended.

In Fig. 2, the total heated floor area served by the manifold is:-

| | |
|---|---|
| Example | Room 1 = 28m² |
| | Room 2 = 20m² |
| | Room 3 = 12m² |
| | Room 4 = 5m² |

Total Floor Area = 65m²
ORDER CODE FOR SOLID FLOOR WOULD BE
S 70.

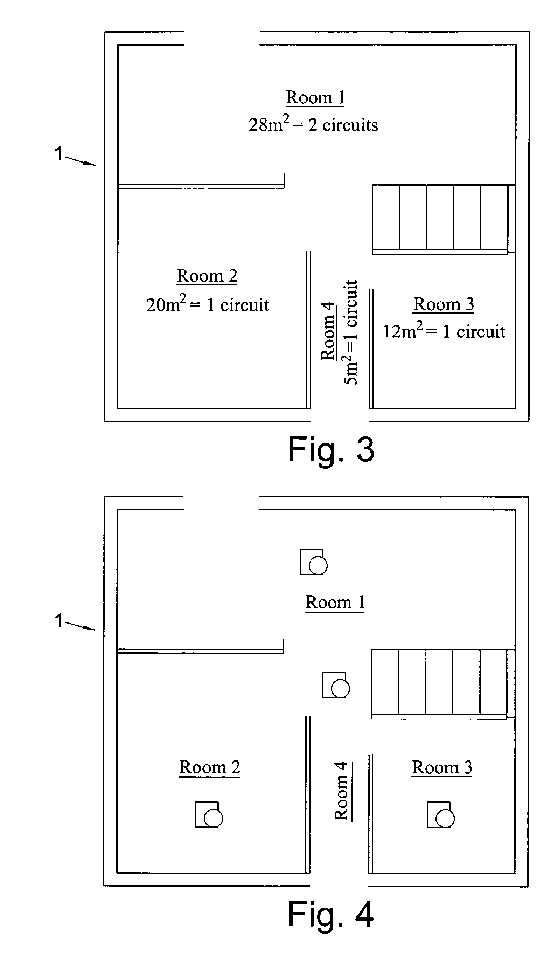

In Fig. 3, there is shown step two of the method, namely the number of circuits required, *viz:-*
1 Circuit covers 15m²* so rooms of over 15m² will require a circuit for every 15m² *All solid floor circuits at 200mm Centres

| | |
|---|---|
| Example | |
| | Room 1 = 28m² = 2 Circuits |
| | Room 2 = 20m²= 2 Circuits |
| | Room 3 = 12m² = 1 Circuit |
| | Room 4 = 5m² = 1 Circuit |

Total Circuits required 6
ORDER CODE WOULD BE
S 70 6.

In Fig. 4, there is shown step three, namely the number of control zones required, which are usually one per room (though some may in the embodiment be subservient to adjacent rooms e.g. dressing rooms controlled by a bedroom thermostat).

### Example

The total number of Control Zones is therefore 4
THE TOTAL ORDER CODE WOULD BE
S 70 6 4
i.e. S = Solid Floor, 70 = 65m² Floor Area, 6 = Circuits, 4 = Zone Control.

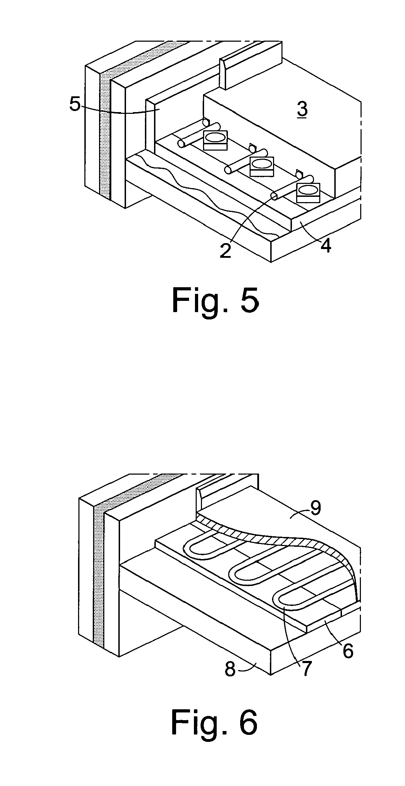

Fig. 5 shows schematically a broken away part of a solid floor of a room to be heated by apparatus selected by the method, the heating in the form of a pipe in floor panel 2 for heated water being laid under a solid floor screed 3 of minimum 65mm depth and over insulation 4 and a solid sub-floor, there being edge insulation 5.

Fig. 6 shows schematically part of an overlay (trade mark) floor, a heating panel 6 including a serpentine hot/warm water carrier pipe with end returns 7 laid over a solid floor 8 and under a floor covering such as carpet or wooden or other tiles 9.

In using the method, the compatibility of the space to be heated is checked with the following:-

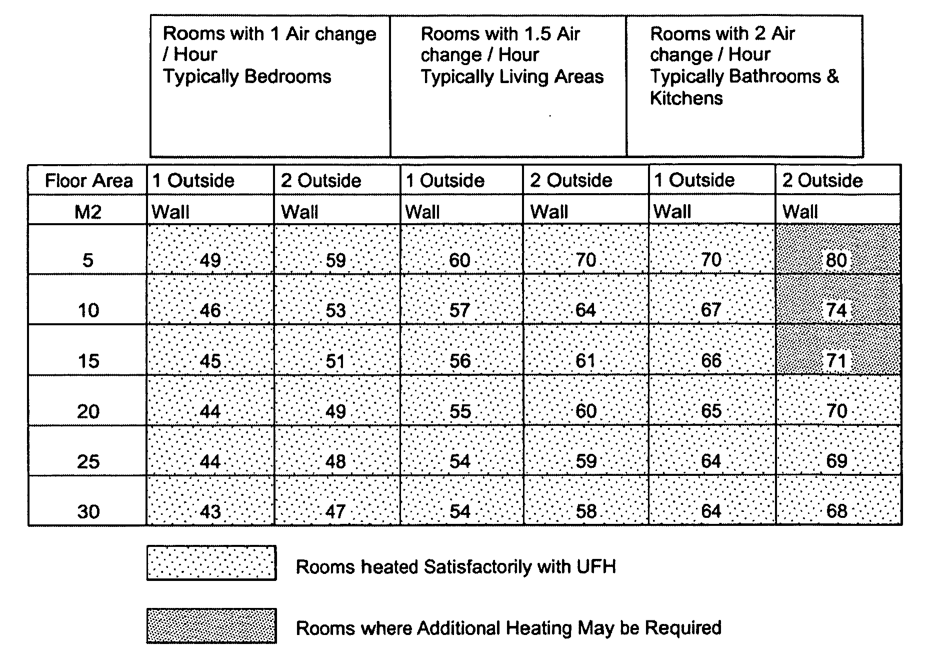

The above heat losses are based on the following:
Internal design temperature 21 deg C
External Design Temperature -3 Deg C
Outside Walls U=0.35w/m2degC
Windows Area = 20% of Floor Area U= 2.2w/m2deg C
Ceiling U= 0.25w/m2deg C

It will be understood that using the apparatus and method hereinbefore described, a person who wishes to install products can create a single "pack" of products by going through the first, second and third steps referred to above, in other words steps "1, 2, 3". Thus it is not necessary to order a variety of separate items, once the "1, 2, 3" calculation is carried out, it is only necessary to order the desired discrete number of "packs" for a particular installation using one code number which is provided by the method of the invention hereinbefore described.

## Claims

1. Apparatus for heating a space, comprising a heating device adapted to be laid in or on a substrate of a floor, and a temperature regulation element for controlling the heating device dedicated to combinations of particular floor type and size.

2. Apparatus according to Claim 1, having a maximum output of 100 w/m².

3. Apparatus according to Claim 1 or Claim 2, the temperature regulation element comprising a zonal regulation unit.

4. Apparatus according to claim 1 or claim 2, the temperature regulation unit comprising an electric heating unit.

5. Apparatus according to Claim 4, the unit comprising a pump, heater device and tank for containing heatable liquid.

6. Apparatus according to Claim 5, the heater device comprising a 2kw heater.

7. Apparatus according to Claim 3, the space comprising a room, and the floor being a solid floor.

8. Apparatus according to Claim 7, the floor area being up to about 12m and the temperature regulation unit comprising a zonal regulation unit.

9. Apparatus according to Claim 7, the floor area being up to about 20m² and the temperature regulation unit comprising an electric heating unit.

10. Apparatus according to Claim 4, the space comprising a room and the floor being an overlay floor.

11. Apparatus according to Claim 10, the floor area being up to 12m² and the temperature regulation unit comprising a zonal regulation unit.

12. Apparatus according to Claim 11, the floor area being up to 5m² and the temperature regulation unit comprising a zonal regulation unit with a temperature limiting valve.

13. Apparatus according to Claim 10, the floor area being up to 16m² and the temperature regulation unit comprising an electric heating unit.

14. Apparatus according to Claim 10, the floor area being up to 20m² and the temperature regulation unit comprising a zonal regulation unit.

15. Apparatus according to any preceding claim, the space comprising a multi-room space such as a house.

16. Apparatus according to Claim 15, the heating device comprising a manifold, for each room, adapted to provide heating liquid to the device.

17. Apparatus according to Claim 16, the manifolds each being positioned within 7.5m from an entrance to the room.

18. Apparatus according to Claim 16 or Claim 17, comprising for each room one or more heating circuits depending on the floor area of a room.

19. Apparatus according to Claim 18, there being two said circuits for rooms of area 20m² to 30m².

20. Apparatus according to any of Claims 16 to 19, there usually being one temperature regulation element per room.

21. A method for providing heating to a space comprising a number of separate spaces comprising the steps of selecting a floor type and area of a space to be heated, selecting the number of separate spaces of the space to be heated, selecting a number of heating zones to be controlled in each separate space, and providing a desired number of heating packs for the floor type and area of each separate space to be heated.

22. A method according to Claim 21, comprising providing a list of selection criteria for each separate space whereby to provide for heating of the space.

23. A method according to Claim 21 or Claim 22, the first step comprising selecting a floor type applicable for each separate space served by a single manifold, and selecting the total heated floor area to be served.

24. A method according to Claim 23, the second step comprising selecting the number of circuits to be provided for each separate space.

25. A method according to Claim 24, the third step comprising selecting the number of control zones for each separate space.

26. A method according to any of Claims 21 to 25, comprising providing a code from which respective heating device packs for a space are selected according to the selection steps carried out.

27. A method according to any of Claims 21 to 26, comprising the step of checking the compatibility of the space to be heated against parameters for each particular space.

28. A method according to Claim 27, comprising the step of checking a position of an inlet manifold for heating water of the pack in relation to an entrance to a particular space.

29. A method according to Claim 28, comprising providing a location of the manifold of between 6m and 7.5m from the entrance.

30. A method according to any of Claims 21 to 29, comprising the step of providing one heating pack per floor.

31. A method according to Claim 30, comprising providing one heating pack per floor type.

32. A method according to Claim 31, comprising providing a maximum floor area per pack of 120m².

33. A method according to Claim 32, comprising providing a maximum number of circuits per pack of twelve.
